# EUROPÄISCHE PATENTSCHRIFT

(11) **EP 1 035 237 B1**
(45) Veröffentlichungstag und Bekanntmachung des Hinweises auf die Patenterteilung: **28.07.2004**
(21) Anmeldenummer: 00103951.0
(22) Anmeldetag: 25.02.2000
(51) Int. Cl.: D01B 1/14, D01B 1/26, D01B 9/00, D01G 11/00, B02C 13/20, B02C 13/288

(54) **Vorrichtung zur Behandlung oder Weiterverarbeitung, insbesondere zur Zerlegung von Stoffen oder Stoffgemischen**
Apparatus for treating or further processing, especially for breaking up of materials or material mixtures
Appareil pour la manipulation ou pour le traitement ulterieur, notamment pour le déchiquetage de materiaux ou de melange de materiaux

(30) Priorität: 09.03.1999 DE 19910208
(43) Veröffentlichungstag der Anmeldung: 13.09.2000
(73) Patentinhaber: Hesch, Rolf, Prof. Dr., 32657 Lemgo (DE)
(72) Erfinder: Hesch, Rolf, Prof. Dr., 32657 Lemgo (DE)
(74) Vertreter: Frank, Gerhard, Dipl.-Phys.

(56) Entgegenhaltungen:
- EP-A- 0 367 255
- EP-A- 0 491 673
- DE-A- 3 703 309
- DE-C- 560 743
- US-A- 3 894 695
- US-A- 3 960 334
- US-A- 4 641 791

## Beschreibung

### Stand der Technik:

Von besonderem Interesse sind Stoffe und Stoffgemische mit Anteilen von Fasern verschiedener Art. Bekannt sind zur Zerlegung solcher Stoffe oder Stoffgemische Zerkleinerungsmaschinen, Granulierer, Zerfaserungsmaschinen u. ä. Sieht man von schneidenden Maschinen ab, so sind in erster Linie Schlagkreuzmühlen, Hammermühlen, Shredder und deren Derivate zu nennen.

Schlagkreuzmühlen, Querstrommühlen, Doppelstrommühlen weisen als konstruktive Hauptmerkmale einen Rotor und als Wechselwirkungsbauteil mit dem Aufgabegut einen den Rotor vollständig umgebenden Sieb- oder Mahlring oder eine Kombination von beiden auf. Das Aufgabegut wird axial auf den Rotor aufgegeben und von den Rotorschaufeln auf den umgebenden Sieb- oder Mahlring zentrifugalbeschleunigt. Die an den Enden der Rotorschaufeln oder anderweitig befestigten Verschleißleisten ziehen das Aufgabegut so lange über die umgebende Sieb-/Mahlbahn, bis es so fein zerlegt ist, daß es durch die Sieblochung hindurchtreten kann. Die Sieblochungen sind der Flaschenhals des Systems. Je kleiner sie sind, um so häufiger muß das Aufgabegut vom Rotor über den Siebring gezogen werden, bis es ausreichend zerlegt ist und endlich hindurchtreten kann. Die Leistung sinkt entsprechend, der Energieverbrauch steigt. Wenn mit Mahlbahnen statt mit Siebringen gearbeitet wird, muß das ausreichend zerkleinerte Material durch seitliche Mahlspalte oder die Mahlbahnen begrenzende Siebringe austreten. Auch das sind Flaschenhälse, deren Auswirkungen um so schwerwiegender werden, je feiner zerlegt werden soll und vor allem, je feuchter das Aufgabegut ist.

Bei sehr feuchtem oder gar klebrigem Aufgabegut versagen genannte Maschinen ganz, weil die Sieblochungen und Mahlspalte verstopfen und die Maschinen funktionsuntüchtig werden. Aus diesem Grund werden o.a. Maschinen fast nur bei Aufgabegütern mit einem Feuchtigkeitsgehalt zwischen 1 und 5 %, bezogen auf absolut trocken (atro), eingesetzt, z.B. als Spanzerleger in der Holzwerkstoffindustrie.

Trockene Holzspäne mit nur 1 - 5 % Feuchtigkeit (atro) sind aber sehr spröde. Bei der Zerlegung zu Fein- oder Feinstspänen, wie sie für gute Deckschichten benötigt werden, brechen sie nicht nur in gewünschter Weise parallel zur Faser, sondern wegen ihrer hohen Sprödigkeit auch mehrfach in nachteiliger Weise quer zur Faser. Es entstehen kurze Feinspäne mit einem schlechten Schlankheitsgrad (Verhältnis Länge: Durchmesser". Schlechte Schlankheitsgrade wiederum ergeben geringe Werte für die Biegefestigkeit und eine nicht befriedigende Homogenität der Oberfläche. Im feuchten Zustand ist Holz dagegen flexibel und zäh. Es bricht dann bevorzugt an natürlichen Schwachstellen, z.B. in den dünnwandigen Leitgefäßsträngen oder im Frühholz. Die Zahl der unerwünschten Querbrüche geht stark zurück. Es entsteht ein vorteilhafter Span mit hohem Schlankheitsgrad, also ein langer, dünner Span mit dem höhere Biegefestigkeitswerte und geschlossenere, harte Oberflächen erzeugt werden können.

### Zielsetzung der Erfindung:

Es soll eine Möglichkeit geschaffen werden, Roh- und Werkstoffe einschließlich Abfallstoffen, welche sich aus zwei oder mehr physikalisch ausreichend unterschiedlichen Bestandteilen zusammensetzen, in deren Einzelbestandteile zu zerlegen. Ebenso sollen Gefüge aus einem Bestandteil, z.B. Zellstoffasern im Papierverbund, welche z.B. durch Bindungen irgendeiner Art miteinander verbunden sind, wieder in ihre Einzelbestandteile zerlegt werden können. Eine weitere Zielsetzung besteht darin, dies schonend unter weitgehender Erhaltung der Partikelgrößen, Faserlängen u.ä. durchzuführen, um eine möglichst häufige Wiederholung von Recyclingsvorgängen zu gewährleisten. Zur zusätzlichen Zielsetzung gehört insbesondere, daß insbesonders eine Zerlegung in allen Feuchtigkeitsbereichen, auch in Flüssigkeitssuspensionen möglich ist und selbst klebrige Materialien oder zugemischte klebrige Bestandteile verarbeitbar sind. Weiterhin soll gewährleistet sein, daß die Zerlegung ohne nennenswerte Wärmeentwicklung erfolgt, um beispielsweise das Aroma von Aufgabegütem nicht durch Reibungswärme zu beeinträchtigen, leicht flüchtige Inhaltsstoffe nicht zu verdampfen etc. etc.

### Beschreibung der Erfindung:

Erfindungsgemäß wird diese Aufgabenstellung gemäß dem kennzeichnenden Teil des Patentanspruchs 1 gelöst. Der Grundgedanke der Erfindung besteht in einer Kombination von mehreren Maßnahmen:
Im Gegensatz zu allen Zerkleinerungsmaschinen nach dem Stand der Technik, wie zum Beispiel der DE 37 03 309 A, bei denen der Werkzeugring von einem Siebring umschlossen ist, besitzt der Werkzeugring einen ausgeprägt "offenen Umfang". Darunter ist das Verhältnis von freien Zwischenräumen zwischen den Werkzeugen (lichte Weite) zum Gesamtumfang zu verstehen. Dies ist die entscheidende Voraussetzung dafür, daß Verstopfungen auch bei feuchtem und klebrige Material nicht auftreten können.

### Beispiel:

Die Gesamtheit aller freien Zwischenräume des Umfangs = 4.100 mm, der Gesamtumfang = 5.100 mm, dann ist der "offene Umfang " = 80,4 %. D.h. 80,4 % des Umfangs sind völlig frei, und können daher dem Material einen ungehinderten Durchgang gewähren.

Maschinen nach dem Stand der Technik weisen eine offenen Umfang in diesem Sinne von nur 25 bis 45 % auf. Aus dem sehr großen offenen Umfang ergibt sich bei den in der Praxis vorgesehenen Baugrößen solcher Maschinen auch, daß die **"freie Stützweite"** zwischen je zwei Werkzeugen der erfindungsgemäßen Vorrichtung im Durchschnitt 15 bis 25 mal größer ist als bei Maschinen nach dem Stand der Technik. Sieblochungen bei Maschinen nach dem Stand der Technik bewegen sich um 1,5 - 3,0 mm bei Conidursieben. Schlitzsiebe bewegen sich bei der Feinspanherstellung um 1,5 x 15 mm bis 3,0 x 30,0 mm. Dagegen betragen die freien Felder zwischen den Werkzeugen bei der erfindungsgemäßen Vorrichtung beispielsweise zwischen 40 x 400 mm und 55 x 500 mm, je nach Größe der Maschine. Das bedeutet, daß bei Maschinen nach den Stand der Technik das Aufgabegut eine Vielfache Größe der Sieblochung hat, sich also voll darauf abstützen kann und muß. Selbst das zerlegte Gut hat eine größere Länge als die Breite einer Schlitzlochung, so daß auch nach der Zerlegung noch eine gewisse Abstützungs- und somit Verstopfungsgefahr bleibt.

Völlig anders sieht es bei der erfindungsgemäßen Vorrichtung aus: Hier sind die Stützweiten von Werkzeug zu Werkzeug in der Regel größer als die Längen des Aufgabegutes. Bei Stützweiten von z.B. 40 bis 55 mm ist kein Stück des überwiegend 10 bis 50 mm langen Aufgabegutes in der Lage, sich auf den Werkzeugen abzustützen. Selbst bei längerem Aufgabegut besteht diese Gefahr nicht, da die hohe Zentrifugalkraft bewirkt, daß sich lange Teile durchbiegen und hindurchgeschleudert werden.
Letztlich kann die erfindungsgemäße Vorrichtung auch Freischneidmesser/Räumwerkzeuge beinhalten , die jeglichen Materialaufbau auf dem Rücken von Werkzeugen über 2 mm Höhe automatisch wegschneiden bzw. abräumen.

Das Wirkprinzip der vorbekannten und auch erfindungsgemäßen Vorrichtung besteht darin, daß ein Rotor das Aufgabegut radial beschleunigt. Die erfindungsgemäßen Werkzeuge rotieren mit relativen Umfangsgeschwindigkeiten vorzugsweise um 30 bis 100 m/sek. um den Rotor. Die Wirkkanten der Werkzeuge fangen das radial beschleunigte Aufgabegut im Fluge ungefähr im rechten Winkel ab und bewirken, daß es sich um die Wirkkante biegen bzw. um diese schmiegen muß. Dabei entstehen im einzelnen Stück Aufgabegut impulsartig sehr hohe **Biegeund Scherspannungen,** welche dazu führen, daß sich das Aufgabegut an seinen Schwachstellen zerlegt. Solche Schwachstellen sind z.B. das Frühholz, die Leitgefäß- oder Parenchymstränge des Holzes oder natürliche Spannungs- und Trocknungsrisse, aber auch Verbindungsstellen gleichartiger Bestandteile. Maschinen nach dem Stand der Technik werden werkseitig auf eine als optimal ermittelte Drehzahl eingestellt, die dann in der Regel nicht mehr verändert wird. Die Stellgrößen für den Zerlegungsgrad sind in erster Linie die Größe der Sieblochung, der Abstand der Reibleisten des Rotors zum Sieb oder der Mahlbahn, das Profil der Mahlbahn und deren Orientierung. Die Leistung ist eine Funktion der gewählten Sieb- und/oder Mahlbahnen und nicht weiter einstellbar.

Völlig anders sieht es bei einer bevorzugten Ausgestaltung der erfindungsgemäßen Vorrichtung aus: Die Stellgrößen sind hier die **Umfangsgeschwindigkeiten** von Rotor und Wirkkante der Werkzeuge. Rotor und Werkzeugring werden daher in der Regel mit Drehzahlregeleinrichtungen ausgestattet;

Hohe Geschwindigkeiten bedeuten in der Regel hohen Zerlegungsgrad und somit hohe Leistung
Mäßige Geschwindigkeiten bedeuten niedrigeren Zerlegungsgrad und niedrigere Leistung.

Gestaltungsmöglichkeiten ergeben sich in der Wahl, ob der Rotor oder der Werkzeugring schneller oder langsamer drehen soll. Die Regel ist zwar, daß Rotor und Ring gegenläufig rotieren sollen, aber für einige Anwendungen ist auch ein Arbeiten im gleichen Drehsinn mit unterschiedlichen Geschwindigkeiten anwendbar.

Eine weitere Stellgröße gemäß einer weiteren Ausgestaltung der erfindungsgemäßen Vorrichtung ist die **Luftmenge und die Luftgeschwindigkeit** in der Maschine. Sowohl Rotor als auch Werkzeugring wirken als Radialgebläse und erzeugen die 3 bis 6-fache Menge Eigenluft verglichen mit Maschinen nach dem Stand der Technik. Das ist auf den großen offenen Umfang" zurückzuführen, welcher dem Eigenluftabfluß keine Widerstände oder Drosselung entgegensetzt.

Die hohe Luftmenge bei gleichzeitig hoher Luftgeschwindigkeit trägt in nicht unbeträchtlichem Maße dazu bei, den Maschineninnenraum schnell von zerlegtem/gemischtem Material freizuräumen.

Über eine Drossel an der Materialaufgabe läßt sich hierzu die Luftmenge als Stellgröße stufenlos regeln, welche von Rotor und Werkzeugring angesaugt wird. Dies ermöglicht nicht nur die Luftmenge zu begrenzen, sondern auch die Luftgeschwindigkeit in der Maschine und somit die Verweilzeit, die wiederum Zerlegungsgrad und Durchsatzleistung beeinflusst.

Eine weitere Möglichkeit, diese Stellgröße in hohem Maße zu beeinflussen, besteht in der **Höhe der Werkzeuge** des Werkzeugrings. Eine Mindestanzahl an Werkzeugen, ca. ¼ bis 1/6 , muß eine große Höhe haben, um dem Ring eine ausreichende Quersteifigkeit zu sichern. Diese müssen eingeschweißt werden. Der Rest ist auswechselbar. Bei diesen auswechselbaren Werkzeugen wird die Höhe je nach Bedarf des jeweiligen Anwendungsgebietes gewählt . Werkzeuge mit großer Höhe bewirken einen hohen Gebläseeffekt. Je mehr davon eingebaut sind, um so größer wird die Luftmenge. Soll weniger Eigenluft erzeugt werden, dann kann die Mehrzahl der nicht eingeschweißten Werkzeugpositionen durch Werkzeuge mit geringer Höhe und somit geringer Gebläsewirkung bestückt werden.

Weitere Ausgestaltungen sind weiteren Unteransprüchen zu entnehmen.

### Kurze Beschreibung der Zeichnungen:

- Fig. 1: zeigt einen Längsschnitt durch die Vorrichtung in der Ebene A-A der Fig. 2
- Fig. 2: zeigt einen Querschnitt durch die Vorrichtung in der Ebene B-B der Fig. 1

### Beschreibung eines bevorzugten Ausführungsbeispiels der Vorrichtung:

Im mühlenartigen Maschinengehäuse 1 befinden sich die zwei Hauptaggregate, nämlich Rotor 2 und Werkzeugring 3. Die Wirkweise der Vorrichtung wird in erster Linie vom Werkzeugring 3 erbracht. Zwischen einer Grundscheibe 3.1 und einem Gegenring 3.9 sind Werkzeugträger 3.6 eingeschweißt. Diese besitzen eine große Höhe, um über ein großes Widerstandsmoment die Steifigkeit des Werkzeugringes auch bei hohen Drehzahlen sicherzustellen. Vorzugsweise sind die eingeschweißten großen Werkzeugträger 3.6 keilförmig zur Außenkante hin ausgeführt, um einerseits eine schmale Wirkkante 3.5 zu bieten und somit eine hohe Biegebeanspruchung auf das Aufgabegut ausüben zu können, andererseits über die verbreiterte Außenkante eine hohe Steifigkeit des Werkzeugringes auch über die Tangente zu erzielen.

Die Mehrzahl der Werkzeuge bzw. Werkzeugträger 3.4 ist austauschbar. Sie werden eingesteckt und/oder eingeschraubt. Sie können mit oder ohne austauschbarer Wirkund/oder Verschleißkante 3.5 ausgeführt sein. Über die Austauschbarkeit wird eine besonders große Vielseitigkeit und Anpassungsfähigkeit an die jeweiligen Anwendungsgebiete erreicht. Soll z.B. ein hoher Zerlegungsgrad von relativ trockenem Material erreicht werden, bei dem keine große Eigenluftleistung benötigt wird, dann können die austauschbaren Werkzeuge 3.4 als Rundstäbe mit kleinem Radius von beispielsweise 5 mm ausgeführt werden. Der kleine Radius bewirkt eine hohe Durchbiegung des Aufgabegutes in der Zerlegungsphase und damit hohe Biege- und Scherspannungen, welche zu einer starken Zerlegung führen.Aufgrund der geringen Oberfläche der Rundstäbe bewirken sie keinen nennenswerten Ventilatoreffekt. Die Eigenlufterzeugung ist entsprechend gering. Bei relativ trockenem Material, das sehr leicht fließt, reicht die geringe Eigenluftmenge zum sicheren Freiräumen der Maschine aus. Soll dagegen sehr feuchtes oder klebriges Material zerlegt oder gemischt werden, dann stellt eine hohe Eigenluftmenge eine wertvolle Ergänzung der Zentrifugalkraft beim Austragen des Materials aus der Maschine dar. Zu diesem Zweck werden Werkzeuge 3.4 mit großer Werkzeughöhe eingebaut. Sie stellen dann Gebläseschaufeln dar und führen zur Erzeugung einer großen Eigenluftmenge. Je höher die Eigenluftmenge und die Eigenluftgeschwindigkeit, um so gründlicher wird die Maschine von feuchtem und klebrigem Material freigeblasen.

Alle Werkzeugträger 3.4 und 3.6 können mit austauschbaren Elementen 3.5 mit unterschiedlichen Wirkkanten ausgestattet werden. Auch dies geschieht mit dem Ziel, der erfindungsgemäßen Vorrichtung eine große Vielseitigkeit und Anpassungsfähigkeit an die unterschiedlichen Anwendungsgebiete zu verleihen. Wie bereits erläutert, bewirken kleine Radien eine hohe Biege- und Scherbeanspruchung und somit eine starke Zerlegung. Eine Vergrößerung des Radius ergibt eine schonende und geringere Zerlegung. Sie ist insbesondere bei trockenem und daher sprödem Material angemessen, um eine unerwünschte Kürzung zu vermeiden Das andere Extrem wären beispielsweise mit ausgeprägten Kanten versehene Wirkkanten bis hin zur Messerform, um z.B. Verbundwerkstoffe mit Duromermatrix und Bewehrungsfasern in Einzelbestandteile zu zerlegen.

Die Austauschbarkeit der Elemente 3.5 ist auch erforderlich, weil naturgemäß ein Verschleiß stattfindet, die Elemente 3.5 mit den Wirkkanten sind auch Verschleißteile.

Das Aufgabegut wird über eine Materialaufgabeöffnung 1.2 in der Maschinentür 1.1 in etwa mittig auf die Abdeck- und Verteilscheibe/Konus 2.4 des Rotors 2 aufgegeben und von diesem verteilt und zentrifugal an die Rotorblätter 2.1 weitergeschleudert. Die Rotorblätter haben die Aufgabe, die Beschleunigung zu steigern und das Material radial den Wirkkanten der Elemente 3.5 zuzuführen.

Rotor 2 und Werkzeugring 3 drehen vorzugsweise gegenläufig. Die Drehzahlen des Rotor 2 bewegen sich im Bereich zwischen 100 und 4.000 UpM, vorzugsweise 400 bis 1.500 UpM. Die Drehzahlen des Werkzeugrings 3 bewegen sich zwischen 0 und 4.000 UpM, vorzugsweise zwischen 200 und 2.000 UpM. Rotor und Ring können aber auch im Gleichlauf arbeiten.

Durch den Rotor 2 wird das Aufgabegut mit hoher Geschwindigkeit weitgehend radial abgeschleudert. Dabei muß es die Kreisbahn der Werkzeuge 3.4 und 3.6 in etwa im rechten Winkel schneiden. Entsprechend der jeweils eingestellten Drehzahl des Werkzeugrings wird es mehr oder minder vollständig von den Wirkkanten der Werkzeuge erfaßt und auf Biegung und Scherung mit dadurch bewirkter Zerlegung in den Schwachzonen beansprucht. Hohe Drehzahl des Werkzeugrings bewirkt ein weitgehend vollständiges Abfangen des Aufgabegutes bei gleichzeitig hohem Energieeintrag ins Material. Das ergibt somit eine weitgehend vollständige Zerlegung und einen hohen Zerlegungsgrad. Eine langsame Drehzahl des Werkzeugrings ergibt eine entsprechend unvollständigere Zerlegung des Materials und einen geringeren Zerlegungsgrad. Auch das ist für eine Reihe von Anwendungsgebieten erwünscht. Obige Effekte können durch eine Veränderung der Drehzahl des Rotors 2 in vorteilhafter Weise stufenlos ergänzt oder gesteigert werden.

Für Anwendungsgebiete, bei denen eine besonders starke Zerlegung/Zerfaserung angestrebt wird, z.B. Feinstdeckschichten von Spanplatten, ist als Option der Einbau eines Stauch-und Reibrings 4 vorgesehen. In der Regel umschlingt er den Werkzeugring bei der erfindungsgemäßen Vorrichtung nur zu ca. ¾ von einem Ende des Auswurfschachts 1.5 zum anderen, da er ja nur eine beschränkte Nachzerlegung oder eine Homogenisierung beim Mischen durchführen soll. Im Gegensatz zu Maschinen nach dem Stand der Technik ist bei dieser Ausführungsform der erfindungsgemäßen Vorrichtung der Stauch- und Reibring nicht für die eigentliche Zerlegung verantwortlich. Ebenfalls im Gegensatz zu Maschinen nach dem Stand der Technik erfährt das Material nicht so viele Umläufe wie nötig, um aus dem Mahlspalt austreten zu können, sondern lediglich ca. einen ca. ¾ Umlauf. Sofern eine Steigerung der Nachmahlung erwünscht ist, kann der Stauch- und Reibring 4 auch als Vollkreis um den Werkzeugring angeordnet werden, um eine Wiederholung des Mahlvorgangs durch mehrere Umläufe zu bewirken. Der Materialabfluß erfolgt dann über die Seiten des Stauch- und Reibrings 4 nur im Bereich des Materialauswurfschachts 1.5, während der Austrag bei Maschinen nach dem Stand der Technik über den gesamten Umfang erfolgt.

Da die erfindungsgemäße Vorrichtung aufgrund des extrem offenen Umfangs" und der intensiven Durchspülung durch die großen Eigenluftmengen nicht verstopfen kann, können Feucht- und Trockenadditive zugegeben und getrennt oder gleichzeitig mit der Zerlegung intensiv eingearbeitet werden. Dazu ist eine Flüssigadditivzugabe 5.1 und eine Feststoffadditivzugabe 5.2 vorgesehen.

### Beschreibung von Anwendungsbeispielen der Vorrichtung:

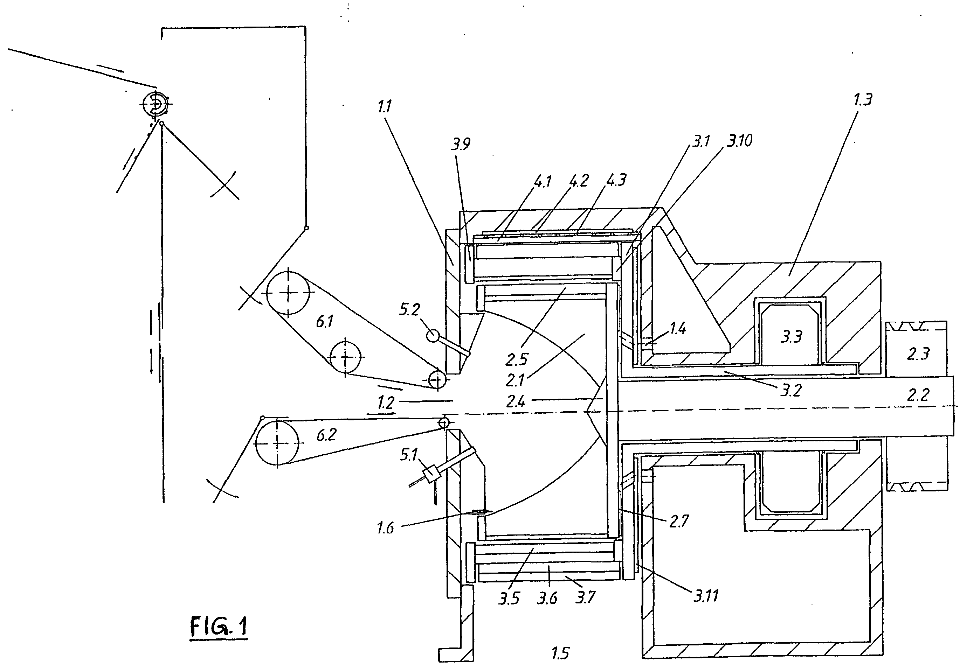

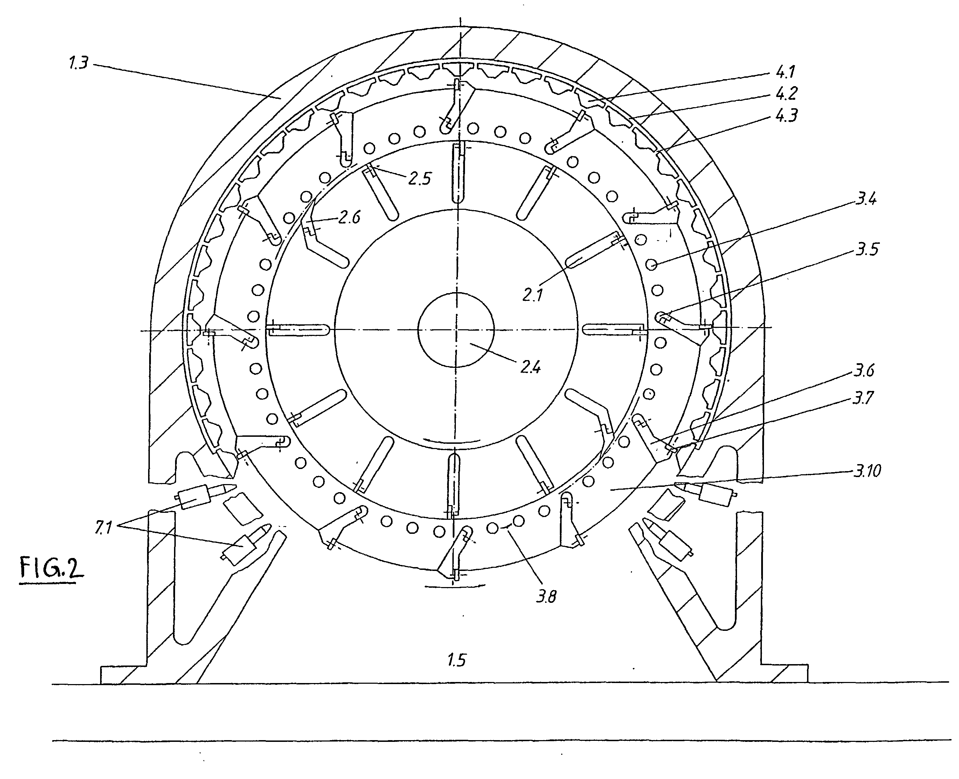

Die im folgenden beispielhaft angeführten Anwendungsbeispiele sollen die Breite des Anwendungsspektrums der oben erläuterten Vorrichtung verdeutlichen,ohne daß dies im einschränkenden Sinn zu verstehen wäre.
Die Anwendungsbeispiele betreffen Anwendungsgruppen,die sich im Wesentlichen durch die Schlagworte Zerkleinern", "Zerlegen" und Mischen" charakterisieren lassen,jeweils bezogen auf konkrete Stoffe oder Materialien als Aufgabegut. Insbesondere gibt die Auflistung dem Fachmann auf dem jeweiligen Gebiet Hinweise,wie die oben beschriebene Ausführungsform der Vorrichtung gemäß Figuren 1 und 2 modifiziert und optimiert werden kann ,um das gewünschte Arbeitsergebnis mit den angegebenen Vorteilen zu erzielen:

### Spanzerlegung:

Es wurde bereits erwähnt, daß in der Spanwerkstoffherstellung lange, schlanke Fein- oder Feinstspäne erwünscht sind, aber derzeit unter wirtschaftlichen Bedingungen noch nicht hergestellt werden können. Spanzerleger nach dem Stand der Technik können nur trockene Späne zerlegen. Bei höheren Feuchtigkeiten verstopfen sie. Trockene Späne sind aber spröde und erfahren bei der Spanzerlegung durch Reibung und Scherung eine unerwünschte starke Kürzung.

Die erfindungsgemäße Vorrichtung ist aufgrund ihres großen offenen Umfangs und der hohen Eigenluftmenge völlig feuchtigkeitsunempfindlich. Sie kann Späne, die von der Zerspanung in der Regel mit einer Feuchtigkeit über 40 % kommen, ohne Probleme zerlegen. Da die Zerlegung als Folge der hohen Biege- und Scherbeanspruchung in den natürlichen Schwachstellen erfolgt, also parallel zur Faserachse, und da die Späne aufgrund der hohen Feuchtigkeit wenig bruchempfindlich sind und Querbrüche wenig auftreten, erhält man einen ideal langen und schlanken Fein- bzw. Mikrospan, mit dem hohe Biegefestigkeiten erreicht werden können.

Wird z.B. ein Feinspan mit großer Länge angestrebt, ist die Biegebeanspruchung an der Wirkkante der Werkzeuge gering zu halten, da sie u.a. für Querbrüche verantwortlich ist. Dies wird erreicht, indem ein Element mit einer Wirkkante mit großem Radius eingebaut wird, welche keine hohe Biegebeanspruchung bewirkt. Die Drehzahlen von Rotor 2.0 und Ring 3.0 werden für diese Zielsetzung vorzugsweise im Bereich zwischen je 600 und 800 UpM gegenläufig einzustellen sein.
Soll dagegen eine besonders starke Zerlegung erfolgen, wobei auch eine stärkere Kürzung in Kauf genommen wird, dann ist die Wirkkante mit kleinem Radius bis hin zu fast messerartigen Geometrie zu wählen, um durch hohe Biegung des Aufgabegutes um die Wirkkante hohe innere Spannungen, insbesondere Scherspannungen im Aufgabegut zu bewirken und somit Risse vorzugsweise parallel zur Holzfaser. Der Zerlegungsgrad kann weiter gesteigert werden, indem die Drehzahlen von Rotor 2.0 und Ring 3.0 in Bereiche um oder über je 1.000 UpM angehoben werden. Eine weitere Steigerung des Zerlegungsgrades wird bewirkt, indem die Luftdrossel 6.0 stark geschlossen wird, um die Luftmenge zu verringern, welche die Vorrichtung ansaugen kann. Das erhöht die Verweilzeit des Aufgabegutes im Wirkbereich und trägt zur Erhöhung des Zerlegungsgrads bei. Als letzte Steigerung des Zerlegungsgrades kann die Stauch- und Reibbahn 4 eingebaut werden, auf der je nach Schärfe des Profils und Abstand zwischen den äußeren Abschnitten der Werkzeuge (Reibleiste) 3.7 und der Stauch- und Reibbahn 4 eine stufenlos einstellbare Nachzerlegung erreicht wird.

### Spanwerkstoffrecycling:

Stand der Technik ist es, Spanwerkstoffe vorzuzerkleinern und dann in einem Autoklav einer Dampfdruckbehandlung zu unterziehen, welche die Bindemittel auflöst. Die Späne können dann der Spanplattenproduktion wieder zugeführt werden. Anwendbar ist dieses Verfahren aber nur bei feuchtigkeitslöslichen oder hydrolisierbaren Klebstoffen. Bei Phenolharzen z.B. geht es nicht. Das Verfahren ist teuer.
Unter Anwendung der Erfindung kann auf die Dampfdruckbehandlung verzichtet und das Recycling von Spanwerkstoffen u.ä. kostengünstiger gestaltet werden. Zu diesem Zweck ist lediglich eine Vorzerkleinerung mit nachfolgender Aufbringung von kaltem Wasser als Vorbereitung erforderlich. Dabei sollte die Vorzerkleinerung in einer Maschine erfolgen , welche möglichst viele Spannungsrisse erzeugt, die als Kapillaren das Wasser ins Innere des zerkleinerten Gutes saugen. Durch die nachfolgende Quellung des Holzes wird der Verbund Quellspannungen unterworfen, die zu einer weiteren Lockerung des Gefüges führen. Hinzu kommt die feuchtigkeitsbedingte Schwächung der Klebstoffugen. Wird dieses Material der Einwirkung der erfindungsgemäßen Vorrichtung unterworfen, dann fällt es weitgehend in Einzelspäne auseinander. Die Stauch- und Reibbahn 4 führt zu einer weiteren Auflösung ohne nennenswerte Kürzung, da das Material aufgrund des hohen Feuchtigkeitsgehaltes flexibel und relativ plastisch ist.

Beim Recycling von aufgeweichten/plastifizierten Spanplatten ist zwischen solchen mit quellfähiger und teilweise wasserlöslicher Harzbindung und solchen zu unterscheiden, die eine feuchtigkeitsbeständige Verleimung besitzen:

Bei quellfähiger und teilweise wasserlöslicher Verbindung genügen Werkzeuge 3.4.....3.6 mit großem Radius ihrer Wirkkanten , um eine Zerlegung zu bewirken. Der große Radius bewirkt eine mäßige Biegebeanspruchung und somit eine schonende Behandlung der Spanlängen. Die Luftdrossel 6 wird dagegen stärker geöffnet, um eine intensive Durchspülung der Vorrichtung zu gewährleisten. Diese ist erforderlich, weil teilweise wasserlösliche Klebeharze einen Schmierenfilm erzeugen, der zu Ansätzen führt, wenn die Vorrichtung nicht kontinuierlich freigeblasen wird.

Bei Spanwerkstoffen mit feuchtigkeitsbeständiger Verleimung müssen alle Möglichkeiten der Vorrichtung ausgeschöpft werden, um eine Zerlegung zu erzielen. Die Werkzeuge 3.4 ........3.6 müssen mit kleinen Radien ihrer Wirkkanten ausgestattet werden, um eine hohe Biege- und Scherspannung im Material aufzubauen und so die Zerlegung zu fördern. Die Drehzahlen von Rotor 2 und Werkzeugring 3 werden im oberen Bereich gefahren, um einen hohen Energieeintrag ins Aufgabegut zu bewirken. Die Stauch- und Reibbahn 4 mit geringem Abstand zur Reibleiste 3.7 bewirkt in diesem Anwendungsfall eine intensive Nachzerlegung.

### Recycling von Kfz-Innenverkleidungen:

Innenverkleidungen von Kraftfahrzeugen bestehen überwiegend aus einer duroplastischen Matrix mit Faserbewehrung. Die Matrix ist vielfach geschäumt. Nach einer Vorzerkleinerung kann das Material ähnlich wie Spanwerkstoffe behandelt werden. Die duroplastische Matrix wird aufgrund ihrer Sprödigkeit zerbrochen, die elastischen Bestandteile lösen sich ab und können anschließend durch Siebe und pneumatische Sichter in ihre Einzelbestandteile fraktioniert werden. Auch für diesen Anwendungsfall stellt der Stauch- und Reibring 4 eine wertvolle Ergänzung dar, um spröde Bestandteile von flexiblen zu lösen.

### Entmarkung von Bagasse:

Zuckerrohrbagasse ist eine wertvolle Faser für die Herstellung von Spanplatten, Homogenplatten, MDF-Platten, Zellstoff und Papier, Furfurol u.a.m. Die Faser ist in eine Matrix von Parenchymgewebe eingebettet. Für Platten und Zellstoff wird nur die Faser benötigt, für Furfurol nur das Parenchymgewebe. Nach dem Stand der Technik ist eine Aufbereitung nur in zwei Prozeßstufen möglich, nämlich Vorentmarkung im nassen Zustand und nachfolgende Zerfaserung durch Schlagkreuzmühlen, Doppelstrommühlen u.ä. nach künstlicher Trocknung. Nasse oder feuchte Bagasse würde Schlagkreuzmühlen sofort verstopfen. Wie bei Holzspänen ist auch hier die Sprödigkeit nach der Trocknung dafür verantwortlich, daß es im Zuge der Zerfaserung zu einer starken Kürzung der Fasern kommt.
Die erfindungsgemäße Vorrichtung ist absolut feuchtigkeitsunempfindlich. Sie zerschlägt das schwammige Parenchymgewebe zu Feingut. Es kann beispielsweise der Furfurolerzeugung zugeführt werden. Den Fasern passiert aufgrund ihrer Flexibilität im feuchten Zustand nichts. Man erhält in nur einem Arbeitsgang eine sehr viel längere Faser als dies mit Maschinen nach dem Stand der Technik möglich ist und somit Platten, Zellstoff, Papier u.a. mit wesentlich besseren Festigkeitswerten.

Bei der Entmarkung und Zerfaserung der Bagasse und vergleichbarer Pflanzen ist bei der Wahl der Stellgrößen zu unterscheiden, ob das Aufgabegut trocken, feucht, naß oder gar in Suspension aufgegeben wird. Bei trockenem Material ist mit großen Radien der Wirkkanten der Werkzeuge 3.4.....3.6 und mittleren Drehzahlen zu arbeiten, wenn die Kürzung in Grenzen gehalten werden soll. Auf den Einsatz eines Stauch- und Reibrings 4 wird in der Regel verzichtet werden. Bei nassem Aufgabegut dagegen oder gar in Suspension sind Werkzeuge mit kleinen Wirkkanten-Radien, hohe Drehzahlen und der Einsatz eines Stauch- und Reibrings angezeigt, wenn ein hoher Zerlegungsgrad bei gleichzeitig großem Schlankheitsgrad gewünscht sind. Die austauschbaren Werkzeuge 3.4 werden dann vorzugsweise als Werkzeuge mit großer Höhe eingebaut werden, um einen großen Gebläseeffekt zu bewirken und die Vorrichtung stets gründlich zur Vermeidung von Ansätzen freizublasen.

### Zerlegung von Getreide- und Reisstroh, Riesengräsern u.ä.:

Auch Getreide- und Reisstroh sind Monokotyledone wie Zuckerrohr, bei denen die Fasern in einer Parenchymmatrix eingebettet sind. Auch sie sind im trockenen Zustand brüchig und ergeben bei Verwendung von Maschinen nach dem Stand der Technik zu kurze Fasern. Wie bei der Zuckerrohrbagasse lassen sich die Fasern mit der erfindungsgemäßen Vorrichtung im feuchten Zustand ohne schädigende Kürzung aus der Matrix lösen.
Bezüglich der Maschineneinstellung gilt hier im Prinzip das, was für die Bagasse bereits ausgeführt wurde.

### Altpapierrecycling:

Für die Herstellung von Gips-Faserplatten u.ä. wird Altpapier nach dem Stand der Technik in Hammermühlen o.ä. in trockenem Zustand vorzerkleinert und dann in Schlagkreuzmühlen ebenfalls in trockenem Zustand zerfasert, weil sie feuchtes oder nasses Papier nicht verarbeiten können. Das Ergebnis ist eine starke Faserkürzung und ein hoher Verlust an Feingut. Mit der erfindungsgemäßen Vorrichtung kann Papier in jedem Feuchtigkeitsgrad ohne jegliche Verstopfungsgefahr in Einzelfasern zerlegt werden. Es ist bekannt, daß fast alle Papiere bei Feuchtigkeitszufuhr ihre Festigkeit verlieren und dann leicht aufzulösen sind. Es ist daher naheliegend, das Papier nach der Vorzerkleinerung anzufeuchten und nach starker Schwächung des Verbundes in der erfindungsgemäßen Vorrichtung in Einzelfasern zu zerlegen. Die Feuchtigkeit stört bei der Weiterverarbeitung in keiner Weise, da sowohl Verfahren zur Herstellung von Recyclingpapier als auch zur Herstellung von Gips-Faserplatten o.ä. Naß- oder Feuchtverfahren sind, bei denen die Feuchtigkeit ohnehin benötigt wird.

In ähnlicher Weise lassen sich auch Zellstofftafeln und Holzschlifftafeln bzw. -rollen für Zwecke der Papier- und Pappeherstellung auflösen, wobei dies auch in Wassersuspension erfolgen kann.

Angefeuchtetes und aufgeweichtes Altpapier ist in Bezug auf die Wahl der Stellgrößen relativ anspruchslos. Die Fasern sind ohnehin schon kurz. Sie sind weiterhin durch die Feuchtigkeit schmiegsam und wenig bruchgefährdet. Es können daher Werkzeuge 3.4 und 3.5 jeder Geometrie eingesetzt werden. Ein geringer Energieeintrag genügt in der Regel, daher genügen auch geringe Drehzahlen von Rotor 2 und Werkzeugring 3. Die Drossel 6 wird in der Regel auf großen Luftdurchsatz eingestellt werden, um durch intensive Luftdurchspülung eine Ansatzbildung zu verhindern. Papiere enthalten nämlich eine Reihe von wasserlöslichen Additiven, die zur Schmierenbildung und zu Klebeeffekten neigen. Bei der Auflösung von Zellstoffplatten und Holzschliffrollen bzw. -platten kann im Einzelfall der zusätzliche Einsatz des Stauch- und Reibrings 4 zwecks Nachzerlegung nützlich sein. Für diesen Anwendungszweck bietet sich auch das Arbeiten in Wassersuspension an, um den Zerlegungsgrad zu steigern.

### Mischen von Fasern u. ä.:

Für die Herstellung von Verbundwerkstoffen ist es meist erforderlich, Fasern unterschiedlicher Art homogen miteinander zu mischen. Fasermischanlagen nach dem Stand der Technik haben insbesondere mit auf Stapellänge geschnittenen feinen Polymerfasern erhebliche Probleme. Die Schnittenden werden durch den Schnitt micellenartig zusammengepreßt und können von den Nadelbandmischern nach dem Stand der Technik nur unvollständig aufgelöst werden. Durch den hohen Energieeintrag der erfindungsgemäßenm Vorrichtung werden die zusammengequetschten Enden aufgeschlagen. Die hohen Luftsrömungen in der Vorrichtung führen anschließend zu einer intensiven Verwirbelung und somit zur Vermischung. Die Stauch- und Reibbahn 4 zieht anschließend evtl. noch verbliebene Micellenreste auseinander und führt zu einer weiteren Homogenisierung der Mischung. Die Verwirbelung und Vermischung wird in einem nachfolgenden Radialgebläse fortgesetzt, welches erforderlich ist, um das Material aus der erfindungsgemäßen Vorrichtung abzufördern und die Eigenluft aufzunehmen.Zum Mischen von Fasern unterschiedlicher Art genügt in der Regel jede Werkzeugausstattung. Der Homogenitätsgrad der Mischung steigt mit zunehmender Drehzahl von Rotor 2 und Werkzeugring 3 und mit abnehmender Luftgeschwindigkeit, also längerer Verweilzeit. Der Stauch- und Reibring 4 bewirkt eine Nachhomogenisierung.

### Zumischung von Flüssig- und Trockenadditiven:

Dank der Tatsache, daß die erfindungsgemäße Vorrichtung aufgrund des extrem offenen Umfangs im Zusammenspiel mit der hohen Zentrifugenbeschleunigung und der hohen Eigenluftmenge gegenüber feuchten und klebrigen Materialien völlig unempfindlich ist, kann sie auch zum Zumischen von flüssigen und trockenen Additiven eingesetzt werden. Dabei ist das Flüssigadditiv zuerst zuzufügen, da sonst das Trockenadditiv keine Haftung zum Grundmaterial bekommt.

Die Zumischung kann entweder dadurch erfolgen, daß dem Grundmaterial die Additive schon vor dem Eintritt in die Vorrichtung zudosiert werden. Sie kann aber auch über die hierfür vorgesehenen Flüssigkeitszugabe 5.1 und Festadditivzugabe 5.2 erfolgen.. Die Flüssigkeitsadditivzugabe ist auch über das Kanalsystem 4.2/4.3 möglich.

### Kottonisieren von Rohfasern:

Kottonisieren von zu derben Rohfaserbündeln zu Elementarfasern ist ein weiteres Anwendungsgebiet. Nach dem Stand der Technik wird dies mechanisch durch Nadelwalzen oder Sägezahnwalzen durchgeführt. Dabei erfolgt eine starke Faserschädigung. Andere Bestrebungen zielen darauf ab, das Rohmaterial zuerst einer chemischen Behandlung zu unterziehen, um die Klebstoffverbindungen zwischen den Elementarfasern zu schwächen. Anschließend wird das Material unter Dampfdruck gesezt. Indem der Dampfdruck dann mittels eines Schnellschlußventils schlagartig zum Expandieren gebracht wird, werden die Faserbündel explosionsartig in Elementarfasern zerlegt. In den USA ist dieses Verfahren in der Holzfaserplattenindustrie als "steam explosion process" bekannt. Das Verfahren ist mit hohem Kostenaufwand verbunden und stirbt in den USA deshalb langsam aus.

Weitere Bestrebungen hoffen ebenfalls, chemisch angelöste Faserbündel durch Ultraschall in Einzelfasern zerlegen zu können. Über das Laborstudium ist das Verfahren nicht hinausgekommen.

Chemisch angelöste Rohfasern können durch den hohen Energieeintrag der erfindungsgemäßen Vorrichtung feucht oder in Suspension in Einzelfasern zerlegt werden, wobei mit geringeren Kosten zu rechnen ist.

Je höher die Drehzahl von Rotor 2 und Werkzeugring 3 ist, umso intensiver ist die Kottonisierung. Da der Kottonisierung in der Regel ein chemischer Aufschluß vorausgeht, bilden sich im Aufgabegut Pflanzenschleime mit starker Tendenz zur Ansatzbildung. Hohe Luftgeschwindigkeiten sind angebracht, um die Vorrichtung stets freizublasen.

### Zerfasern von gekochten Hackschnitzeln aus Holz und Einjahrespflanzen:

Nach dem Stand der Technik werden Fasern für die Pappen- und Kartonherstellung,für Faserplatten,MDF-Platten u.ä. durch Heißkochung und anschließende Druckzerfaserung in Zahnscheibenmühlen hergestellt.Zweifellos nicht ganz so fein zerfaserte und weniger gleichmäßige Fasern lassen sich durch Kaltkochung z.B. nach dem Natronverfahren und anschließender Zerlegung in der erfindungsgemäßen Vorrichtung unter Verwendung von schärfer profilierten Elementen 4.1 des Stauch- und Reibrings 4 zu wesentlich günstigeren Kosten herstellen.Zumindest für Karton und Pappen sowie Dämmstoffe reicht die erreichbare Qualität aus.

### Granulierung/Pulverisierung:

Festbrennstoffe vor der Verbrennung zu granulieren oder zu pulverisieren erleichtert die Dosierung und fördert die Verbrennung .Sie werden daher schon heute durch reibende/scherende Mühlen gemahlen,um in Staubfeuerungen eingesetzt werden zu können.Dabei entsteht durch die Reibung/Scherung ein hoher Energieverlust.Die Brandgefahr ist hoch,da harte Fremdkörper auf den Reib- und Scherbahnen so lange zu kometenähnlichen Funkenschweifen führen,bis sie zerrieben sind. Eine andersartige Möglichkeit aus dem Mahlvorgang herauszukommen, gibt es bei Maschinen nach dem Stand der Technik nicht. Bei der erfindungsgemäßen Grundvorrichtung gibt es keine energieverschwendende Reib/Scherarbeit und es entsteht keine Reibungswärme. Ebenso gibt es den Zwang zum Verweilen bis zur völligen Zermahlung nicht, vielmehr beträgt die Verweilzeit nur Bruchteile einer Sekunde.Dementsprechend verlassen zum Funkenschlag befähigte Fremdkörper die Vorrichtung sofort wieder,ohne Schaden anzurichten.Die unzerlegten Fremdkörper landen im Ascheauswurf der Kesselanlage.
Granulierung und Pulverisierung ist auch bei Kalk,Rohgips,Kunststoffen u.ä.Rohund Abfallstoffen nach dem gleichen Prinzip durchführbar,ebenso,wie bei durch Frost versprödeten Materialien.
Die erfindungsgemäße Vorrichtung kann aufgrund ihrer Wirkweise auch zum Verarbeiten von Getreide,Reis,Mais,fetthaltigen Samen und Früchten u.ä. zu Schrot,Gries und Mehlen oder als Aufschluß zur Fett/Ölgewinnung,Herstellung von Maischen usw. eingesetzt werden.
Für diese Anwendungsgebiete ist eine Wirkkante mit kleinen Radien an den Werkzeugen 3.4 und 3.5 zerlegungsfördernd.Hohe,gegenläufige Drehzahlen von Rotor 2 und Werkzeugring 3 und somit hoher Energieeintrag in das Aufgabegut steigern den Zerlegungsgrad..Eine starke Drosselung des Lufteintritts über die Drossel 6 verlängert die Verweilzeit in der Wirkzone und steigert ebenfalls den Zerlegungsgrad.

### Kaltzerlegung:

Eine Reihe von Materialien, insbes. aus den Sektoren Lebensmittel Gewürze,Genußmittel,Heilpflanzen,Duftstoffe,Pharmazeutika u.a. verlieren bei der Mahlung unter Wärmeeinwirkung einen Teil ihres Aromas oder der flüchtigen Wirk- und Inhaltsstoffe oder erfahren sonstige unerwünschte Veränderungen z.B. des Geschmacks.Maschinen nach dem Stand der Technik erzeugen Reibungswärme in erheblichem Maße,sie müssen daher gekühlt werden ,wenn sie zum Mahlen wärmeempfindlicher Rohstoffe/Materialien eingesetzt werden sollen.
Bei der erfindungsgemäßen Grundvorrichtung entsteht annähernd keine Wärme.Für Anwendungszwecke,bei denen der Zerlegungsgrad ohne Stauch- und Reibring 4 ausreicht,ist daher eine aroma- und inhaltsstoffschonende Zerlegung ohne Kühlung möglich,da keine Reibungswärme entsteht. Sofern eine weitergehende Zerlegung den Einsatz des Stauch- und Reibrings erfordert,wird in der Regel auch keine Kühlung erforderlich,da die Verweilzeit des Materials extrem kurz ist.Im äußersten Fall,also bei sehr empfindlichen Materialien,ist eine Kühlung über das integrierte Kanalsystem 4.2/4.3 hinter und im Stauch- und Reibring 4 sehr leicht mit geringem Aufwand durchführbar.
Geschmacksempfindliche Aufgabegüter,Aufgabegüter mit ätherischen o.ä. Inhaltsstoffen ,wärmeempfindliche Güter werden vorzugsweise mit weit geöffneter Luftdrossel 6 gefahren,um durch den hohen Luftstrom die Vorrichtung kalt zu halten.Zusätzlich kann über das Kanalsystem 4.2/4.3 kalte oder gekühlte Luft oder sogar Kühlmittel an das Mahlgut herangeführt werden,um alle nachteiligen Einflüsse einer Erwärmung bei der Zerlegung auszuschließen.Der Zerlegungsgrad wird primär über die Drehzahl von Rotor 2 und Werkzeugring 3 stufenlos eingestellt.Je höher die Drehzahlen,umso höher der Zerlegungsgrad. Der Zerlegungsgrad kann weiter über die Geometrie der Werkzeuge 3.4 und 3.5 gestaltet werden.Bei trockenen Kräutern wird ein großer Radius der Wirkkanten ein auseinanderplatzen bewirken.Bei harten Körnern oder trockenen Früchten wird ein kleiner Radius der Wirkkanten ,evtl. sogar in Form einer messerartigen Wirkkante die bevorzugte Werkzeugbestückung sein.Sofern das Zerlegungsergebnis durch den Werkzeugring noch zu grob oder zu körnig ist,wird der Stauch- und Reibring 4 zum Einsatz kommen,der unterschiedlich scharf eingestellt werden kann.Mittels des Kanalsystems 4.2 und 4.3 kann jegliche Reibungswärme sofort abgeführt oder es kann sogar unterkühlt werden.

### Bezugszeichenliste

- **1 =**: **Maschinengehäuse**
- 1.1 =: Fronttüre der Maschine
- 1.2 =: Materialaufgabeöffnung
- 1.3 =: Lagerbock für Antriebe
- 1.4 =: Spülluft-Ansaugeöffnung
- 1.5 =: Materialaustragsschacht
- 1.6 =: stionäres Freischneidmesser

- **2 =**: **Rotor**
- 2.1 =: Rotorblätter
- 2.2 =: Rotorwelle
- 2.3 =: Keilriemenscheibe des Rotors
- 2.4 =: Verteilkonus
- 2.5 =: Verschleißplatten
- 2.6 =: Freischneidmesser/Räumwerkzeug
- 2.7 =: Spülluftflügel

- **3 =**: **Werkzeugring**
- 3.1 =: Grundscheibe
- 3.2 =: Hohlwelle zum Antrieb des Werkzeugrings
- 3.3 =: Antrieb des Werkzeugrings, hydraulisch o. elektro-mechanisch
- 3.4 =: Wechselwerkzeug, Höhe und Geometrie wählbar, mit oder ohne auswechselbarer Wirkkante
- 3.5 =: auswechselbare, in der Geometrie wählbare Wirkkante
- 3.6 =: großer Werkzeugträger, eingeschweißt
- 3.7 =: Stauchleiste, auswechelbar
- 3.8 =: "offener Umfang" in % =Quotient aus behinderungsloser Durchtrittsbreite (freie Stützweite) zwischen zwei Werkzeugen und Weite zw. zwischen deren Mittellinien
- 3.9 =: Gegenring zur Grundscheibe des Werkzeugrings
- 3.10 =: Montagering
- 3.11 =: Gebläserippe zur Grundscheibe des Werkzeugrings
- **4 =**: **Stauch- und Reibring**
- 4.1 =: Stauch- und Reibbahn
- 4.2 =: Kanalsystem für Druckluft, Kühlund Trockenluft
- 4.3 =: Durchbrüche in Stauch- und Reibring als Fortsetzung des Kanalsystems 4.2
- **5 =**: **Additivzugabe**
- 5.1 =: Flüssigadditivzugabe
- 5.2 =: Festadditivzugabe

- **6 =**: **Luftdrossel**
- 6.1 =: Einzugsband, unten oder oben
- 6.2 =: untere oder obere Querschnittsbegrenzung

- **7 =**: **Werkzeugabstrahlung**
- 7.1 =: Druckmedium

## Patentansprüche

1. Vorrichtung zur Behandlung von Stoffen mittels eines Rotors (2), dem derartiges Aufgabegut axial zugeführt wird, und mittels Bauteilen zur Wechselwirkung mit den vom Rotor zugeführten Bestandteilen des Aufgabeguts,
**dadurch gekennzeichnet, dass** insbesondere zur Zerlegung von Stoffen oder Stoffgemischen in unterschiedliche oder gleichartige Bestandteile der Rotor (2) Rotorblätter (2.1) aufweist, die das Aufgabegut mit hoher Geschwindigkeit radial abschleudern, dass die Bauteile zur Wechselwirkung aus Werkzeugen (3.4...3.6) gebildet sind, die an einem Werkzeugring (3) gehalten sind, der den Rotor (2) umgibt, so dass die Wirkflächen der Werkzeuge das vom Rotor (2) radial beschleunigte Aufgabegut im Fluge ungefähr im rechten Winkel abfangen, wodurch eine dynamische Beanspruchung des Aufgabeguts durch impulsartige Biege- und/oder Scherbeanspruchungen der Bestandteile des Aufgabeguts beim Auftreffen auf die Wirkflächen der Werkzeuge (3.4...3.6) entsteht, deren Stärke zur Festlegung der Eigenschaft der behandelten Stoffe über die Drehzahl des Rotors (2) und/oder die Drehzahl des Werkzeugrings (3) und/oder die dem Rotor (2) und dem Werkzeugring (3) zur Ansaugang zur Verfügung gestellte Luftmenge/Luftgeschwindigkeit festlegbar ist, und dass die Werkzeuge (3.4...3.6) am Werkzeugring (3) so weit beabstandet sind, dass ein weitgehend offener Umfang (3.8) entsteht, der einen ungehinderten Austrag der zerlegten oder behandelten Bestandteile des Aufgabeguts nach der Wechselwirkung mit den Werkzeugen (3.4...3.6) gewährleistet.

2. Vorrichtung nach Anspruch 1, **dadurch gekennzeichnet, dass** eine erste Gattung der Werkzeuge (3.6) mit dem Werkzeugring (3) zur mechanischen Stabilisierung flächig verbunden, insbesondere verschweißt ist.

3. Vorrichtung nach Anspruch 1, **dadurch gekennzeichnet, dass** eine zweite Gattung der Werkzeuge (3.4) mit dem Werkzeugring (3) insgesamt austauschbar verbunden ist.

4. Vorrichtung nach Anspruch 2, **dadurch gekennzeichnet, dass** die Werkzeuge (3.6) der ersten Gattung eine nach außen sich keilförmig verbreiternde Form aufweisen.

5. Vorrichtung nach Anspruch 2 und 3, **dadurch gekennzeichnet, dass** zumindest die erste Gattung der Werkzeuge (3.6) austauschbare Elemente (3.5) mit Wirkflächen unterschiedlicher Geometrie aufweisen.

6. Vorrichtung nach Anspruch 5, **dadurch gekennzeichnet, dass** die austauschbaren Elemente (3.5) eine unterschiedliche Höhe haben, die eine vierte Stellgröße zur Beeinflussung von Luftmenge und/oder Luftgeschwindigkeit innerhalb der Vorrichtung bildet.

7. Vorrichtung nach Anspruch 3 bis 6, **dadurch gekennzeichnet, dass** die Werkzeuge (3.4) der zweiten Gattung im Wesentlichen formgleich mit den Werkzeugen (3.6) der ersten Gattung sind.

8. Vorrichtung nach Anspruch 2 und 6, **dadurch gekennzeichnet, dass** die Werkzeuge der ersten und der zweiten Gattung abwechselnd auf dem Umfang des Werkzeugrings (3) gehalten sind, wobei auf N Werkzeuge der ersten Gattung M Werkzeuge der zweiten Gattung kommen.

9. Vorrichtung nach Anspruch 1, **dadurch gekennzeichnet, dass** eine Luftdrossel (6) an der Aufgabeöffnung (1.2) des Maschinengehäuses (1) vorgesehen ist, in dem sich der Rotor (2) befindet.

10. Vorrichtung nach Anspruch 9, **dadurch gekennzeichnet, dass** die Luftdrossel (6) aus mindestens einem Einzugsband (6.1) und einem querschnittsbegrenzenden Gegendruckaggregat (6.2) besteht.

11. Vorrichtung nach Anspruch 1 und 10, **dadurch gekennzeichnet, dass** zur Veränderung der dem Rotor (2) und dem Werkzeugring (3) zur Ansaugung zur Verfügung gestellten Luftmenge der Ausgangsquerschnitt von Einzugsband (6.1) und/oder Gegendruckaggregat (6.2) verstellbar ist.

12. Vorrichtung nach Anspruch 1, **dadurch gekennzeichnet, dass** auf den Rotorblättem (2.1) des Rotors (2) mindestens ein Freischneidmesser/Freiräumwerkzeug (2.6) angebracht ist, das mit den austauschbaren Elementen (3.5) des Werkzeugrings (3) zusammenwirkt, um dortige Ablagerungen des Aufgabeguts zu verhindern und/oder zu beseitigen.

13. Vorrichtung nach Anspruch 1, **dadurch gekennzeichnet, dass** am feststehenden Teil der Vorrichtung mindestens ein Werkzeug (1.6) angebracht ist, um Materialaufbauten an den Hinterkanten der Rotorblätter (2.1) des Rotors (2.0) kontinuierlich zu beseitigen.

14. Vorrichtung nach Anspruch 1 bis 3, **dadurch gekennzeichnet, dass** konzentrisch zum Werkzeugring (3) sich ein Stauch- und Reibring (4) über einen Umfangsbereich (UB) erstreckt, dessen Elemente (4.1) mit den äußeren Abschnitten (3.7) von Werkzeugen (3.4, 3.6) beider Gattungen zusammenwirken, um das bearbeitete Aufgabegut einer ergänzenden Behandlung zu unterziehen.

15. Vorrichtung nach Anspruch 14, **dadurch gekennzeichnet, dass** ein Kanalsystem (4.2) mit Öffnungen (4.3) Teil des Stauch- und Reibrings (4) ist.

16. Vorrichtung nach Anspruch 15, **dadurch gekennzeichnet, dass** das Kanalsystem (4.2) mit den Öffnungen (4.3) mit Druckluft beaufschlagbar ist, um Ablagerungen des Aufgabegutes zu verhindern und zu beseitigen.

17. Vorrichtung nach Anspruch 15, **dadurch gekennzeichnet, dass** über das Kanalsystem (4.2) mit den Öffnungen (4.3) Zuschlagstoffe (z.B. Trocknungsmittel, Kühlmittel, Heizmittel, Schmälzmittel, Flammschutzmittel, Klebstoffe) in den Bereich zwischen Werkzeugring (3) und Stauch-und Reibring (4) einbringbar sind, um eine Konfektionierung des Aufgabegutes zu erzielen.

18. Vorrichtung nach Anspruch 1, **dadurch gekennzeichnet, dass** im Maschinengehäuse (1.0) mindestens eine Werkzeugabstrahlung (7.1) zum Abblasen von Anlagerungen und/oder zum Aufsprühen von ansatzlösenden, schmälzenden o.ä. Mitteln vorgesehen ist.

19. Verwendung einer Vorrichtung nach einem der Ansprüche 1 bis 18, zur Zerkleinerung von weitgehend amorphen, organischen oder anorganischen Stoffen als Aufgabegut zu Granulat, Gries oder Pulver.

20. Verwendung einer Vorrichtung nach einem der vorhergehenden Ansprüche, zur Zerlegung von hinsichtlich der Struktur und/oder der Zusammensetzung seiner Komponenten heterogenem Aufgabegut in vorzugsweise zwei untereinander im wesentlichen gleichartige Bestandteilgruppen.

21. Vorrichtung nach Anspruch 20, **dadurch gekennzeichnet, dass** das Aufgabegut aus Roh- oder Werkstoffen besteht, deren physikalische Struktur Schwach- oder Bruchstellen aufweist, an denen die Zerlegung durch die dynamische Beanspruchung durch die Werkzeuge (3.4...3.6) erfolgt.

22. Vorrichtung nach Anspruch 20, **dadurch gekennzeichnet, dass** das Aufgabegut aus Roh- oder Werkstoffen besteht, deren physikalische Struktur mindestens einen spröden und einen flexiblen Bestandteil aufweist, die durch die von den Werkzeugen (3.4...3.6) ausgeübten Biege- und/oder Scherbeanspruchungen in die entsprechenden Bestandteilgruppen zerlegt werden.

23. Vorrichtung nach Anspruch 21 oder 22, **gekennzeichnet durch** Nahrungsmittel, Genussmittel oder wirkstoffhaltige Stoffe als Aufgabegut.

24. Vorrichtung nach Anspruch 23, **gekennzeichnet durch** die Kaltzerlegung des Aufgabeguts.

25. Verwendung der Vorrichtung nach einem der Ansprüche 1 bis 18, zur Mischung oder Homogenisierung von zumindest zwei untereinander gleichartigen, festen oder flüssigen Bestandteilen des Aufgabeguts zu einem im wesentlichen homogenen Mischprodukt.

26. Vorrichtung nach einem der Ansprüche 21 bis 24, **dadurch gekennzeichnet, dass** das Aufgabegut einen Feuchtigkeitsanteil von bis zu 99 % aufweist.

27. Vorrichtung nach Anspruch 26, **dadurch gekennzeichnet, dass** das Aufgabegut viskose, insbesondere hochviskose oder klebrige Bestandteile enthält.

## Claims

1. Device for treating substances by means of a rotor (2) to which feed material of this type is supplied axially, and by means of components to interact with the constituents of the feed material supplied by the rotor, **characterised in that**, in particular for disintegrating substances or compounds into different or similar constituents, the rotor (2) has rotor blades (2.1) which throw the feed material radially away at high speed, **in that** the components for interaction are formed from tools (3.4...3.6) which are retained on a tool ring (3) which surrounds the rotor (2), such that the effective surfaces of the tools capture the feed material, which is accelerated radially by the rotor (2), in flight approximately at a right angle, by which means dynamic stressing of the feed material is produced by pulse-like bending and/or shearing stress on the constituents of the feed material as it hits the effective surfaces of the tools (3.4...3.6), the strength of these stresses being capable of being set to determine the nature of the treated substances via the speed of the rotor (2) and/or the speed of the tool ring (3) and/or the amount of air/air velocity made available to the rotor and the tool ring for suction, and **in that** the tools (3.4...3.6) are spaced apart so far on the tool ring (3) that a largely open circumference (3.8) is produced, which guarantees unhindered discharge of the disintegrated or treated constituents of the feed material after the interaction with the tools (3.4...3.6).

2. Device according to claim 1, **characterised in that** a first type of tools (3.6) is connected flat to the tool ring (3) for mechanical stabilisation, in particular is welded.

3. Device according to claim 1, **characterised in that** a second type of tools (3.4) is connected to the tool ring (3) in an overall exchangeable manner.

4. Device according to claim 2, **characterised in that** the tools (3.6) of the first type have a shape which widens outwards in a wedge shape.

5. Device according to claims 2 and 3, **characterised in that** at least the first type of tools (3.6) has exchangeable elements (3.5) which have effective surfaces of differing geometry.

6. Device according to claim 5, **characterised in that** the exchangeable elements (3.5) have differing heights, which form a fourth control variable to influence the amount of air and/or the air velocity inside the device.

7. Device according to claims 3 to 6, **characterised in that** the tools (3.4) of the second type are substantially identical in shape to the tools (3.6) of the first type.

8. Device according to claims 2 and 6, **characterised in that** the tools of the first and of the second type are retained alternately on the circumference of the tool ring (3), there being M tools of the second type for N tools of the first type.

9. Device according to claim 1, **characterised in that** an air throttle (6) is provided at the feed inlet (1.2) of the machine housing (1) in which the rotor (2) is located.

10. Device according to claim 9, **characterised in that** the air throttle (6) comprises at least one pull-in belt (6.1) and a counter-pressure assembly (6.2) which delimits the cross-section.

11. Device according to claims 1 and 10, **characterised in that** the outlet cross-section of the pull-in belt (6.1) and/or counter-pressure assembly (6.2) can be adjusted to alter the amount of air made available to the rotor (2) and the tool ring (3) for suction.

12. Device according to claim 1, **characterised in that** there is attached to the blades (2.1) of the rotor (2) at least one shear-off knife/cleaning tool (2.6), which cooperates with the exchangeable elements (3.5) of the tool ring (3) in order to prevent and/or remove deposits of the feed material there.

13. Device according to claim 1, **characterised in that** at least one tool (1.6) is attached to the stationary part of the device in order to continuously remove material build-ups on the rear edges of the blades (2.1) of the rotor (2.0).

14. Device according to claims 1 to 3, **characterised in that** a compression and friction ring (4) extends over a circumferential region (UB) concentrically with respect to the tool ring (3), the elements (4.1) of which compression and friction ring cooperate with the outer portions (3.7) of tools (3.4, 3.6) of both types in order to subject the processed feed material to additional treatment.

15. Device according to claim 14, **characterised in that** a channel system (4.2) having apertures (4.3) forms part of the compression and friction ring (4).

16. Device according to claim 15, **characterised in that** compressed air can be applied to the channel system (4.2) having apertures (4.3) in order to prevent and to remove deposits of the feed material.

17. Device according to claim 15, **characterised in that** via the channel system (4.2) having apertures (4.3), additives (e.g. drying agents, coolants, heating agents, lubricants, flame retardants, adhesives) can be introduced into the region between the tool ring (3) and the compression and friction ring (4) in order to achieve manufacture of the feed material.

18. Device according to claim 1, **characterised in that** at least one tool blasting means (7.1) is provided in the machine housing (1.0) to blow away deposits and/or to spray on deposit-dissolving, lubricating or similar agents.

19. Use of a device according to one of claims 1 to 18, to reduce largely amorphous, organic or inorganic substances as the feed material to granules, grains or powder.

20. Use of a device according to one of the preceding claims, to separate feed material, which is heterogeneous in respect of the structure and/or composition of its components, into preferably two groups of constituents which are substantially similar to one another.

21. Device according to claim 20, **characterised in that** the feed material comprises raw or working materials, the physical structure of which has weak or rupture points at which disintegration takes place due to dynamic stressing by the tools (3.4...3.6).

22. Device according to claim 20, **characterised in that** the feed material comprises raw or other materials, the physical structure of which has at least one brittle constituent and one flexible constituent which are separated into the corresponding groups of constituents by the bending and/or shearing stresses exerted by the tools (3.4...3.6).

23. Device according to claim 21 or 22, **characterised by** utility and luxury foodstuffs or substances containing active agents as the feeder material.

24. Device according to claim 23, **characterised by** the cold disintegration of the feed material.

25. Use of the device according to one of claims 1 to 18 for mixing or homogenising at least two solid or liquid constituents of the feed material, which are similar to one another, to form a substantially homogeneous mixed product.

26. Device according to one of claims 21 to 24, **characterised in that** the feed material has a moisture content of up to 99%.

27. Device according to claim 26, **characterised in that** the feed material contains viscose, especially highly viscose or adhesive constituents.

## Revendications

1. Dispositif pour le traitement de matières au moyen d'un rotor (2) auquel une telle charge de matière est acheminée axialement, et au moyen de pièces constitutives pour interaction avec des constituants de la charge acheminés par le rotor,
**caractérisé en ce qu'**en particulier pour déchiqueter des matières ou mélanges de matières en des constituants différents ou analogues, le rotor (2) présente des lames rotoriques (2.1) qui éjectent radialement la charge, à grande vitesse, **en ce que** les pièces constitutives pour l'interaction sont constituées par des outils (3.4...3.6) qui sont montés sur un anneau porte-outil (3) qui entoure le rotor (2) de sorte que les faces actives des outils captent au vol, approximativement à angle droit, la charge accélérée radialement par le rotor (2), d'où il résulte une sollicitation dynamique de la charge par des sollicitations impulsionnelles, en flexion et/ou en cisaillement, des constituants de la charge lors de l'impact sur les faces actives des outils (3.4...3.6), sollicitations dont la force peut être déterminée pour déterminer les propriétés des matières traitées, par l'intermédiaire du régime de rotation du rotor (2) et/ou du régime de rotation de l'anneau porte-outil (3) et/ou de la quantité d'air/vitesse de l'air qui est mobilisé pour le rotor (2) et l'anneau porte-outil (3) pour l'aspiration, et **en ce que** les outils (3.4...3.6) sont suffisamment espacés sur l'anneau porte-outil (3) pour qu'il en résulte une périphérie largement ouverte (3.8) assurant une évacuation sans obstacle des constituants déchiquetés ou traités de la charge, après l'interaction avec les outils (3.4...3.6).

2. Dispositif selon la revendication 1, **caractérisé en ce qu'**une première sorte des outils (3.6) est reliée par une surface, en particulier soudée avec l'anneau porte-outil (3), pour la stabilisation mécanique.

3. Dispositif selon la revendication 1, **caractérisé en ce qu'**une deuxième sorte des outils (3.4) est reliée d'une manière interchangeable dans l'ensemble avec l'anneau porte-outil (3).

4. Dispositif selon la revendication 2, **caractérisé en ce que** les outils (3.6) de la première sorte présentent une forme s'élargissant en coin vers l'extérieur.

5. Dispositif selon revendication 2 et 3, **caractérisé en ce qu'**au moins la première sorte des outils (3.6) présente des éléments interchangeables (3.5) avec des faces actives de géométrie différente.

6. Dispositif selon la revendication 5, **caractérisé en ce que** les éléments interchangeables (3.5) ont une hauteur différente qui constitue une quatrième grandeur de réglage pour influer sur la quantité d'air et/ou vitesse de l'air à l'intérieur du dispositif.

7. Dispositif selon revendication 3 à 6, **caractérisé en ce que** les outils (3.4) de la deuxième sorte sont pour l'essentiel de même forme que les outils (3.6) de la première sorte.

8. Dispositif selon revendication 2 et 6, **caractérisé en ce que** les outils de la première et de la deuxième sorte sont montés alternativement sur le pourtour de l'anneau porte-outil (3), dans lequel N outils de la première sorte sont suivis par M outils de la deuxième sorte.

9. Dispositif selon la revendication 1, **caractérisé en ce qu'**il est prévu un étranglement pour l'air (6) à l'ouverture d'apport (1.2) du carter de machine dans lequel se trouve le rotor (2).

10. Dispositif selon la revendication 9, **caractérisé en ce que** l'étranglement pour l'air (6) est constitué par au moins un tapis d'introduction (6.1) et par un ensemble de contre-pression (6.2) limitant la section transversale.

11. Dispositif selon revendication 1 et 10, **caractérisé en ce que** pour modifier la quantité d'air mobilisée pour le rotor (2) et l'anneau porte-outil (3) pour l'aspiration, la section de sortie du tapis introducteur (6.1) et/ou de l'ensemble de contre-pression (6.2) est réglable.

12. Dispositif selon la revendication 1, **caractérisé en ce que** sur les lames rotoriques (2.1) du rotor (2) il est monté au moins un couteau de coupe de dégagement/outil de déblaiement (2.6) qui coopère avec les éléments interchangeables (3.5) de l'anneau porte-outil (3) pour y empêcher et/ou éliminer les dépôts de charge.

13. Dispositif selon la revendication 1, **caractérisé en ce qu'**au moins un outil (1.6) est monté sur la partie fixe du dispositif pour éliminer de façon continue les accumulations de matière derrière les arêtes des lames rotoriques (2.1) du rotor (2.0).

14. Dispositif selon revendication 1 à 3, **caractérisé en ce qu'**un anneau de refoulement et de friction (4) s'étend concentriquement à l'anneau porte-outil (3) sur une zone (UB) de la périphérie et dont des éléments (4.1) coopèrent avec les parties extérieures (3.7) d'outils (3.4, 3.6) des deux sortes, pour soumettre la charge travaillée à un traitement complémentaire.

15. Dispositif selon la revendication 14, **caractérisé en ce qu'**un système de canal (4.2) avec des ouvertures (4.3) forme une partie de l'anneau de refoulement et de friction (4).

16. Dispositif selon la revendication 15, **caractérisé en ce que** le système de canal (4.2) avec les ouvertures (4.3) peut être alimenté en air comprimé, pour empêcher ou éliminer les dépôts de charge.

17. Dispositif selon la revendication 15, **caractérisé en ce qu'**on peut introduire par le système de canal (4.2) avec les ouvertures (4.3), des additifs (par exemple agent siccatif, agent de refroidissement, agent de chauffage, agent d'ensimage, agent anti-flamme, adhésif) dans la zone entre l'anneau porte-outil (3) et l'anneau de refoulement et de friction (4), pour procéder à une préparation de la charge.

18. Dispositif selon la revendication 1, **caractérisé en ce qu'**il est prévu dans le carter de la machine (1.0) au moins une projection sur l'outillage (7.1) pour chasser les dépôts par soufflage et/ou pulvériser des agents pour dissoudre les dépôts, des agents d'ensimage ou des agents analogues.

19. Utilisation d'un dispositif selon l'une des revendications 1 à 18, pour le broyage de matières organiques ou inorganiques, en grande partie amorphes, en tant que charge, pour obtenir un granulat, gravier ou poudre.

20. Utilisation d'un dispositif selon l'une des revendications précédentes, pour déchiqueter une charge qui est hétérogène en ce qui concerne sa structure et/ou l'assemblage de ses composants, pour obtenir de préférence deux groupes de constituants essentiellement analogues l'un à l'autre.

21. Dispositif selon la revendication 20, **caractérisé en ce que** la charge est constituée de matières brutes ou ouvrées, dont la structure physique présente des points faibles ou de rupture, où le déchiquetage s'opère par la sollicitation dynamique exercée par les outils (3.4...3.6).

22. Dispositif selon la revendication 20, **caractérisé en ce que** la charge est constituée de matière brutes ou ouvrées dont la structure physique présente au moins un constituant fragile et un constituant flexible qui sont déchiquetés en les groupes de constituants correspondants par les sollicitations de flexion et/ou de cisaillement exercées par les outils (3.4...3.6).

23. Dispositif selon la revendication 21 ou 22, **caractérisé par** des aliments, des friandises ou des matières contenant de la matière active, en tant que charge.

24. Dispositif selon la revendication 23, **caractérisé par** le déchiquetage à froid de la charge.

25. Utilisation d'un dispositif selon l'une des revendications 1 à 18, pour mélanger ou homogénéiser au moins deux constituants de la charge analogues l'un à l'autre, solides ou fluides, en un produit mélangé sensiblement homogène.

26. Dispositif selon l'une des revendications 21 à 24, **caractérisé en ce que** la charge présente une teneur en humidité jusqu'à 99%.

27. Dispositif selon la revendication 26, **caractérisé en ce que** la charge contient des constituants visqueux, en particulier très visqueux ou collants.
